Europäisches Patentamt

European Patent Office

Office européen des brevets

(11) Publication number: **0 415 662 A2**

# EUROPEAN PATENT APPLICATION

(21) Application number: 90309301.1

(51) Int. Cl.⁵: **H02J 9/02**

(22) Date of filing: 24.08.90

(30) Priority: 29.08.89 FI 894047

(43) Date of publication of application:
06.03.91 Bulletin 91/10

(84) Designated Contracting States:
AT BE CH DE DK ES FR GB GR IT LI LU NL SE

(71) Applicant: TEKNOWARE OY
Ilmarisentie 8
SF-15200 Lahti(FI)

(72) Inventor: Kuisma, Jouko
Kivamäentie 18
SF-15200 Lahti(FI)

(74) Representative: Newby, John Ross et al
J.Y. & G.W. Johnson Furnival House 14/18
High Holborn
London WC1V 6DE(GB)

(54) An arrangement for supervising the condition of a safety light system.

(57) The invention relates to an arrangement for the control of the condition of a safety light system, which comprises an emergency power supply unit (24) and several light fittings (23) connected to a power line (1) by means of conductors (2). The arrangement includes a central unit (4) for collecting data relating to the condition of the light fittings (23) and for giving alarms, if necessary. Each light fitting (23) belongs to a light unit (5) including a sensor (12) measuring the light output of the light fitting (23) and having an individual answer-back code. Each light unit (5) is arranged to inform the central unit (4) of the value measured by its sensor (12), after having received the individual code from the central unit. The current conductors (2) are suitably used for bi-directional data exchange between units (4) and (5).

EP 0 415 662 A2

# AN ARRANGEMENT FOR SUPERVISING THE CONDITION OF A SAFETY LIGHT SYSTEM

The present invention relates to an arrangement for supervising the condition of a safety light system, which safety light system comprises a safety light centre including an emergency power supply, such as an accumulator battery, and a plurality of light fittings connected to the safety light centre through conductors, which arrangement for condition supervising comprises a central unit for collecting data relating to the condition of the light fittings from sensor means associated with each light fitting and monitoring the light output from the various light fittings and optionally means for giving an alarm, if necessary.

The purpose of a safety light system is to secure a safe exit for people from public premises or the like in a crisis situation (e.g. a power cut, a fire etc.). Such safety light systems have to be constructed according to pertinent safety regulations, which, however, do not normally guarantee that the system is continuously in working order. As basic components of such systems are parts such as incandescent bulbs and fluorescent lamps which have a finite working life, and as emergency power supplies most usually accumulator batteries. The operating life of these components is quite limited (lamps 1 to 2 years, accumulators 3 to 10 years) and is strongly dependent on environmental factors - and use (temperatures, overvoltages etc.).

Normally the working condition of the safety light systems should be checked several times a year and books kept of testings made and repairs undertaken. In addition, one person is nominated to be responsible for the supervision of the system. The system and the books are supervised also by a fire inspector.

Because persons responsible for supervising buildings or fire inspectors do not always necessarily have a sufficient training and experience for the supervision of these systems, the supervision provided is often quite superficial, especially as far as maintenance of accumulators is concerned. Thus, there exists an obvious need of an arrangement for the control of the condition of a safety light system, by means of which it would be possible to monitor the working condition of the system continuously and to give appropriate alarms, if the operation of any light fitting or the emergency power supply became defective.

The above object is achieved by means of an arrangement for condition control according to the invention which is characterised in that each sensor means measuring the light level forms part of a light unit having an individual answer-back code, the light unit being arranged to inform the central unit of the value measured by its sensor means, after having received the individual code from the central unit.

The light unit is preferably arranged to communicate with the central unit via the current conductors of the light units. In this case, the arrangement for the condition control does not need any additional wiring, because the information necessary for the control is transmitted digitally along the current conductors of the light units, and thus, an arrangement according to the invention can be easily added to an existing signal and safety light system.

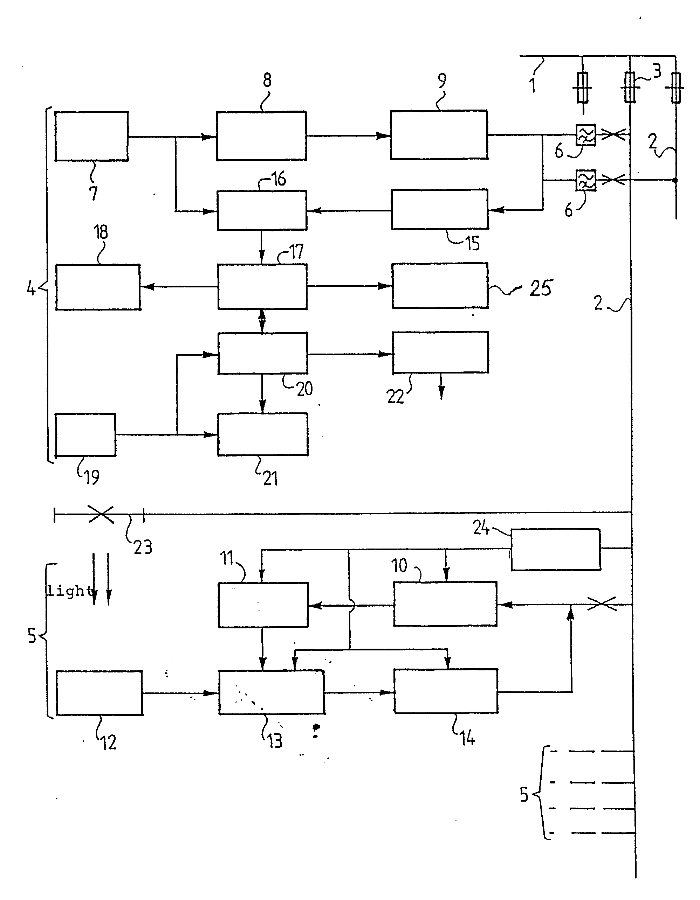

One embodiment of safety light system in accordance with the invention will now be described with reference to the accompanying drawing, the sole figure of which shows the structure of the system in a block circuit diagram.

The safety light system illustrated comprises conventional structural elements, such as an emergency power supply, most usually an accumulator battery, and certain structural units possibly relating thereto, such as, for example, an inverter unit or units, if fluorescent lamps are used as light fittings. From a main current supply line 1, current conductors 2 leading to different light units 5, via fuses 3, pass to light fittings 23 (only one of which is shown). The arrangement for the condition control according to the invention comprises a central unit 4 (e.g. located in the vicinity of an administrative control centre). The line 1 is connected to the current conductors 2 of the light units 5 after the fuses 3 thereof, each light unit 5 including a different light fitting, and on the one hand, a sensor 12 measuring the light level produced by the light fitting, and on the other hand, means linked to this sensor, which controls data communication with the central unit 4. The communication between the central unit 4 and the light units 5 takes place bidirectionally as digitally coded information through the current conductors 2.

The central unit 4 is connected to the current conductors 2 of the light fittings 23 through highpass filters 6 capable of transmitting information bidirectionally. As shown in the drawing, the central unit 4 comprises several operating blocks relating, on the one hand, to receiving and storing data from the light units 5, and on the other hand, to giving alarms when fault conditions are detected. During normal operation, the central unit 4 controlled by a clock 7 transmits a signal which is coded in block 8 and modulated in block 9 before being passed to the conductors 2 via filters 6. This transmission includes the individual code of some particular light unit 5. This code is received by all the light units 5 where it is demodulated in block 10 and coded in block 11. When receiving its individual code, the light unit 5 in question reads the measuring value of the light level sensor 12 monitoring the light fitting in that unit 5 and transmits the information, after coding in block 13 and modulating in block 14, back to the central unit 4, again via the current conductor 2. In the central unit 4, this answer is demodulated in block 15 and the demodulated signal is coded in block 16 and stored in block 17. The received signal is also compared with preset permitted operating values held in block 17 and when the reading differs sufficiently from these permitted operating values, an alarm is given in block 18. In addition, or alternatively, the reading can be presented in human readable form in block 25. For the production of periodic reports, the central unit 4 further comprises a period (e.g. a one month) clock 19, which can be in contact with the memory block 17 through a data connection 20. Thus it is possible, controlled by the clock 19, to print out in block 21 reports on the condition of the entire safety light system at regular intervals. The data connection 20 is also in contact with a modem 21, which, for example, through a telephone or wireless link is in contact for instance with a computer of the control centre of the area. This makes it possible to bring tne state of the system to a wider audience.

In the arrangement for the control of condition according to the invention, the information for the control is received from a sensor associated with each light fitting and measuring the respective light level. These sensors 12 can be positioned either inside the light fittings or close to them. They receive operating power from the current conductors of the light fittings 23 through a power supply unit 24 in the same manner as the rest of the light unit 5. The arrangement preferably includes also a sensor (not shown) for monitoring the operating state (e.g. measuring the voltage) of the emergency power supply unit 24, such as an accumulator battery. When an arrangement for condition control is realised in this way, regular checks on the condition of the safety light system can be carried out in a very simple manner, either on a regular basis or when desired as for instance at the initiative of a fire inspector. When operating at regular intervals, the central unit 4 connects the operation of the safety light system to the emergency power supply units 24 according to a programmed clock. Simultaneously, a test of the discharge of the or each power supply unit is initiated. After the system has operated for a required time (for instance 30 minutes), the central unit 4 carries out a poll among the light units 5, asking each light unit 5 in turn about the light level of the light fitting 23 of that unit. Further, the central unit 4 notes the final voltage of the unit 24 of the sensor measuring it and of the means connected thereto and corresponding to the means of the light unit. The measuring values received at the unit 4 can be printed out on paper with dates of the tests and if there are defective light fittings in the system or any power supply unit 24 does not meet the status condition required, the central unit 4 also gives an alarm. As mentioned above, such a testing can be started also manually in connection with a fire inspection.

The arrangement for the condition control according to the invention has been described above by means of one exemplifying embodiment only and it is to be understood that several modifications obvious to one skilled in the art can be made therein without, however, departing from the scope of the following claims. It is to be understood that the basic idea of the arrangement for the condition control according to the invention, i.e. that each light fitting is provided with a light unit to be called individually and measuring the light level of the light fitting, can be carried out also by means of operating blocks of other kinds than has been mentioned above. It is highly desirable for the invention that the information between the central unit and the various light units is transmitted through the current conductors of the light fittings.

## Claims

1. An arrangement for supervising the condition of a safety light system which safety light system comprises a power supply line (1), at least one emergency power supply unit (24) and a plurality of light fittings (23) connected to the power supply line through conductors (2), which arrangement for condition supervising comprises a central unit (4) for collecting data relating to the condition of the light fittings (23) from sensor means (12) associated with each light fitting and monitoring the light output from the various light fittings, characterised in that each sensor means (12) measuring the light level forms part of a light unit (5) having an individual answer-back code, the light unit (5) being arranged to inform the central unit (4) of the value measured by its sensor means (12), after having received the code from the central unit (4).

2. An arrangement according to claim 1, characterised in that the light units (5) are arranged to be in contact with the central unit (4) through the current conductors (2) of the light fittings (23).

3. An arrangement according to claim 1 or claim 2, characterised in that the central unit (4) includes an alarm (18) to attract attention when any light fitting (23) or emergency power supply unit (24) is not operating to a pre-set required level.

4. An arrangement according to any preceding claim, characterised in that the codes are transmitted digitally along the conductors (2) linking the central unit (4) and each light unit (5).